# EUROPÄISCHE PATENTSCHRIFT

(11) **EP 1 144 216 B1**
(45) Veröffentlichungstag und Bekanntmachung des Hinweises auf die Patenterteilung: **08.10.2003**
(21) Anmeldenummer: 00972727.2
(22) Anmeldetag: 11.10.2000
(51) Int. Cl.: B60K 15/035

(54) **KRAFTSTOFFBEHÄLTER FÜR EIN KRAFTFAHRZEUG**
FUEL TANK FOR A MOTOR VEHICLE
RESERVOIR DE CARBURANT POUR VEHICULE

(30) Priorität: 28.10.1999 DE 19951969
(43) Veröffentlichungstag der Anmeldung: 17.10.2001
(73) Patentinhaber: Bayerische Motoren Werke Aktiengesellschaft, 80809 München (DE)
(72) Erfinder: STROHMAYER, Manfred, 85540 Haar (DE); LINZ, Norbert, 97346 Iphofen (DE)
(86) Internationale Anmeldenummer: EP0009982
(87) Internationale Veröffentlichungsnummer: WO01030601

(56) Entgegenhaltungen:
- DE-A- 3 015 189
- DE-A- 3 417 507
- DE-A- 19 712 963

## Beschreibung

Die Erfindung betrifft einen Kraftstoffbehälter für ein Kraftfahrzeug mit einem innerhalb des Kraftstoffbehälters eingebauten Ausgleichsbehälter, an dem Ventile zum Entlüften des Kraftstoffbehälters, zur Begrenzung des Befüllniveaus, sowie zur Begrenzung des im Kraftstoffbehälter herrschenden Druckes angeordnet sind, und geht aus von der DE-A-34 17 507.

Aus der DE-C-41 21 323 oder aus der DE-A-197 12 963 sind Kraftstoffbehälter für ein Kraftfahrzeug bekannt, bei denen sich ein Ausgleichsvolumen oder Ausgleichsbehälter außerhalb des Kraftstoffbehälters befindet. Eine solche Bauweise hat den Nachteil, dass die beiden Behälter relativ viel Bauraum erfordern. Dabei sind insbesondere am Ausgleichsbehälter nach der DE 197 12 963 A1 praktisch alle Ventil- und Regelaggregate fest angeordnet.

Aus der gattungsbildenden DE-A-34 17 507 ist ein Kraftstoffbehälter mit einem integrierten Ausgleichsbehälter bekannt, an welchem ebenfalls bereits einige Ventile, so ein Entlüftungsventil, ein Roll-Over-Ventil und ein Grenzdruckventil angeordnet sind. Zwar zeichnet sich dieser bekannte Kraftstoffbehälter durch eine kompakte Bauweise aus, jedoch können mit den relativ wenigen Ventilen, die an diesem bekannten Ausgleichsbehälter vorgesehen sind, nicht alle möglichen Betriebszustände, die sich insbesondere bei einem Betanken, d.h. Befüllen des Kraftstoffbehälters mit Kraftstoff einstellen können, sicher abgedeckt werden.

Eine Abhilfemaßnahme für diese geschilderte Problematik aufzuzeigen, ist Aufgabe der vorliegenden Erfindung
Die Lösung dieser Aufgabe ist dadurch gekennzeichnet, dass am Ausgleichsbehälter neben einem ersten Befüllbegrenzungsventil, das bei Erreichung einer maximalen Füllhöhe bei einem Betankungsvorgang schließt, oberhalb der maximalen Füllhöhe mindestens ein weiteres Entlüftungsventil vorhanden ist, das bei einem um die Fahrzeuglängsachse und/oder um die Fahrzeugquerachse geneigten Kraftstoffbehälter bei einer Beaufschlagung mit Kraftstoff schließt.
Vorteilhafte Aus- und Weiterbildungen sind Inhalt der Unteransprüche.

Zunächst einmal wird durch die bekannte Integration eines Ausgleichsbehälters in den Innenraum eines erfindungsgemäßen Kraftstoffbehälters eine kompakte Bauweise erreicht. Dabei ist von Vorteil, dass der Kraftstoffbehälter einfacher montierbar ist und beispielsweise in senkrechter Führung bei der Montage an die Karosserie verbaut werden kann. Durch die Integration der beiden Bauteile ist von Vorteil, dass die abzudichtenden Flächen verringert sind, so dass die Kraftstoffverdunstung reduziert ist.

Durch die kompakte Bauweise können vor dem Einbau des Kraftstoffbehälters in das Kraftfahrzeug sämtliche Prüfungen, zum Beispiel auf Dichtigkeit und Funktion, erfolgen. An den erfindungsgemäßen Ausgleichsbehälter sind vorteilhafterweise die wesentlichen Ventile zum Entlüften des Kraftstoffbehälters, zur Begrenzung des Befüllniveaus, zur Regelung eines im Kraftstoffbehälter vorgegebenen Grenzdruckes, sowie ggf. zum Auslaufschutz bei einem Überschlag (Roll-Over) angeordnet, so dass die abzudichtenden Flächen verringert sind und somit die Kraftstoffverdunstung reduziert ist.

Bei dem erfindungsgemäßen Kraftstoffbehälter ist vorteilhafterweise eine Steuerung der Betankungs- und Betriebsentlüftung bei einer waagrechten und bei einer geneigten Lage des Kraftstoffbehälters möglich, und zwar durch das oder die genannte(n) weitere(n) Entlüftungsventile, das oder die bei einer Neigung des Fahrzeugs um seine Längsachse und/oder seine Querachse anspricht bzw. ansprechen. Ferner kann ein spezielles Entlüftungsventil, das als Grenzdruckregelventil arbeitet, eine fein dosierte Befüllungsregelung des Kraftstoffbehälters ermöglichen. So kann ein derartiges Grenzdruckregelventil auch eine Übertankung durch langsames Nachfüllen verhindern. In Verbindung mit den weiteren Entlüftungsventilen kann das Grenzdruckregelventil bis zu einem definierten Überdruckbereich. sperren. Im Sinne einer weiteren Funktion kann das Grenzdruckregelventil ab einem bestimmten Überdruck, der beispielsweise 50 mbar beträgt und der höher als der Betankungsdruck ist, der beispielsweise 20 mbar beträgt, öffnen so dass dann ein Überdruck im Kraftstoffbehälter abgebaut wird.

Ferner können - was grundsätzlich bereits bekannt ist - bei einem Überschlag (Roll-Over) sowie bei einem Überdruck innerhalb des Kraftstoffbehälters ansprechende und somit eine Grenzdruckregelung durchführende Ventile ebenfalls am Ausgleichsbehälter angeordnet sein, wodurch eine vorteilhafte, da vormontierbare Baueinheit geschaffen wird.

Eine Ausführungsform der Erfindung wird nachstehend anhand der Zeichnungen beispielshalber beschrieben. Dabei zeigen:
- Fig. 1: eine Ansicht von oben auf einen offenen Kraftstoffbehälter mit einem außerhalb des Kraftstoffbehälters angeordneten Roll-Over-Ventil und
- Fig. 2: eine Querschnittsansicht eines Kraftstoffbehälters, bei dem sich das Roll-Over-Ventil innerhalb des Kraftstoffbehälters befindet.

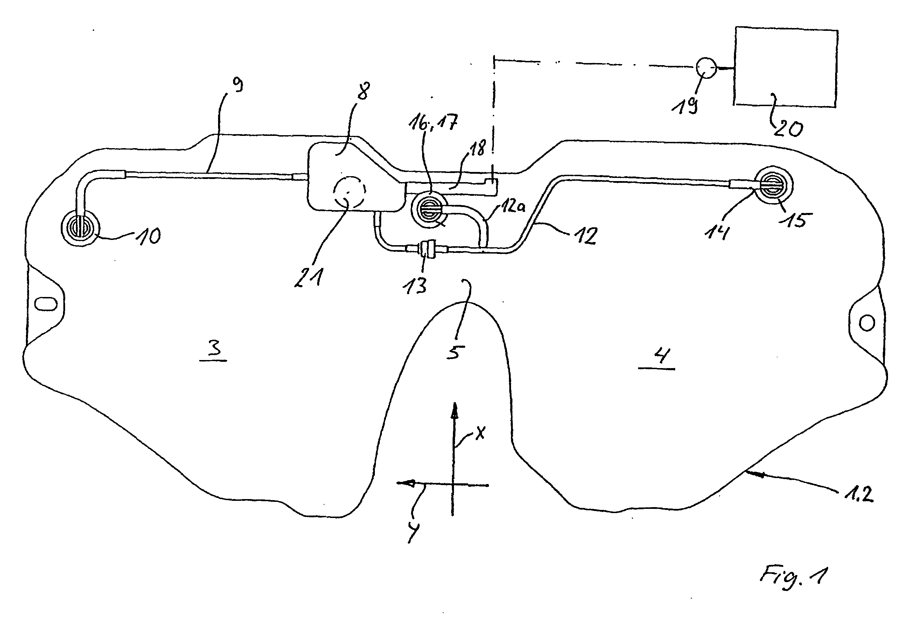

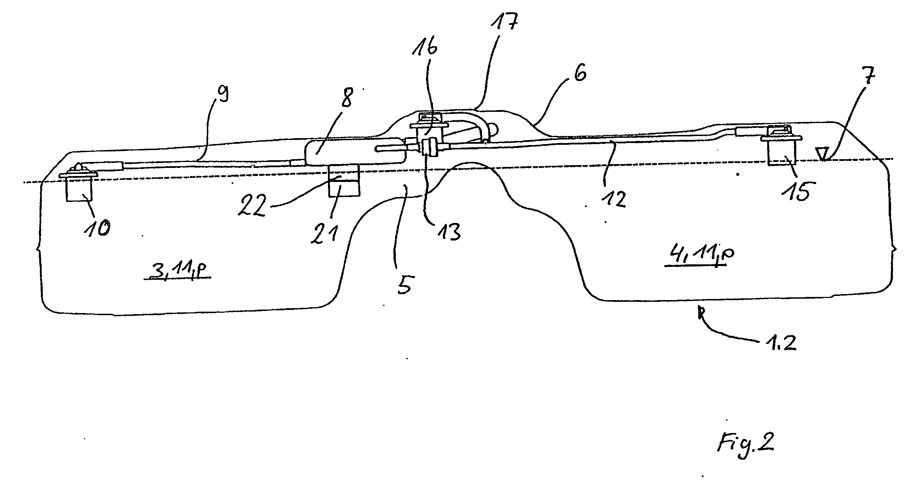

Die Fig. 1 zeigt einen Kraftstoffbehälter 2 eines Kraftfahrzeuges 1, der zwei Kammern 3 und 4 aufweist. Die beiden Kammern 3 und 4 sind über einen Sattel oder Verbindungsabschnitt 5 miteinander verbunden. Wie aus der Fig. 2 hervorgeht, ist unterhalb einer oberen Abdeckung 6 und oberhalb eines maximalen Befüllniveaus 7 des Kraftstoffbehälters 2 ein Ausgleichs-Volumen-Behälter oder Ausgleichsbehälter 8 innerhalb des Kraftstoffbehälters 2 angeordnet.

In strichlierten Linien ist in der Fig. 1 die Lage eines Befüllbegrenzungsventils 21 unterhalb des Ausgleichsbehälters 8 angedeutet. In der Fig. 2 ist oberhalb des Befüllbegrenzungsventils 21 ein Roll-Over-Ventil 22 integriert. Bei einer integrierten Anordnung des Roll-over Ventils 22 im Befüllbegrenzungsventil 21 sind die Schwimmerventile 10, 15, 16 mit einer zusätzlichen Roll-Over Funktion ausgelegt.

Das Befüllbegrenzungsventil 21 schließt, wenn beim Betankungsvorgang das maximale Befüllniveau 7 des Kraftstoffbehälters 2 bzw. eine 100%-ige Befüllung des Kraftstoffbehälters 2 erreicht ist.

Über eine Leitung 9 ist der Ausgleichsbehälter 8 mit einem Entlüftungs- oder Schwimmerventil 10 verbunden, das sich in der gezeigten Ausführungsform in der Kammer 3 in einer solchen Höhe befindet, dass das Schwimmerventil 10 bei einem maximalen Befüllniveau 7 in einen, im Kraftstoffbehälter 2 befindlichen Kraftstoff 11 eintaucht. Das Schwimmerventil 10 in der Kammer 3 ist in einem Bereich geöffnet, in dem die sich in der Kammer 3 befindliche Kraftstoffmenge 12 um ca. 10 - 20% unterhalb des maximalen Befüllniveaus 7 liegt. Auf diese Weise ist die Entlüftung im Kraftstoffbehälter 2 bis zu einer Befüllung des Kraftstoffbehälters 2 mit 80 - 90% der maximalen Kraftstoffmenge drucklos.

An dem Ausgleichsbehälter 8 ist eine weitere Leitung 12 angeschlossen, in der ein Hysterese- oder Grenzdruckregelventil 13 sowie am Ende 14 der Leitung 12 ein Entlüftungs- oder Schwimmerventil 15 angeordnet ist. Das Schwimmerventil 15 ist, wie dies aus der Fig. 2 hervorgeht, unmittelbar unter der oberen Abdeckung 6 angeordnet und in einem Bereich des maximalen Befüllniveaus 7 zuzüglich eines Expansionsvolumens von 3 bis 10% noch offen. In der gezeigten Ausführungsform ist zwischen dem Grenzdruckregelventil 13 und dem Schwimmerventil 15 über einen Leitungsabschnitt 12a ein weiteres Entlüftungs- oder Schwimmerventil 16 an der Leitung 12 angeschlossen. Das Schwimmerventil 16 befindet sich in der gezeigten Ausführungsform an der höchsten Stelle 17 der oberen Abdeckung 6 ungefähr in der Mitte zwischen den beiden Kammern 3 und 4.

Während das Schwimmerventil bei einer 100%-igen Befüllung der Kammer 3 bzw. des Kraftstoffbehälters 2 in einer waagrechten Lage des Kraftstoffbehälters 2 schließt, sperrt das Schwimmerventil 15 in einer um die Fahrzeuglängsachse x geneigten Lage des Kraftstoffbehälters 2 die Leitung 12 ab. Das Schwimmerventil 16 schließt in dem Fall, in dem das Kraftfahrzeug 1 um eine Fahrzeugquerachse nach oben oder nach unten geneigt ist. Das Grenzdruckregelventil 13 hat die Funktion, eine Übertankung durch langsames Nachfüllen zu verhindern. In einer weiteren Funktion sperrt das Grenzdruckregelventil 13 bis zu einem definierten Überdruckbereich. Ab einem bestimmten Überdruck, der beispielsweise 50 mbar beträgt und der höher als der Betankungsdruck ist, der beispielsweise 20 mbar beträgt, öffnet das Grenzdruckregelventil 13, so dass der Überdruck im Kraftstoffbehälter 2 abgebaut wird.

In der in der Fig. 1 gezeigten Ausführungsform strömt das aus dem Ausgleichsbehälter 8 abgeführte Gas bzw. der Kraftstoffdampf durch eine Leitung 18 zu einem Roll-Over-Ventil 19 und von dort zu einem Aktivkohlebehälter 20 oder dergleichen.

## Patentansprüche

1. Kraftstoffbehälter für ein Kraftfahrzeug mit einem innerhalb des Kraftstoffbehälters (2) eingebauten Ausgleichsbehälter (8), an dem Ventile (10; 13) zum Entlüften des Kraftstoffbehälters, zur Begrenzung des Befüllniveaus, sowie zur Begrenzung des im Kraftstoffbehälter herrschenden Druckes angeordnet sind,
**dadurch gekennzeichnet, dass** am Ausgleichsbehälter (8) neben einem ersten Befüllbegrenzungsventil (21), das bei Erreichung der maximalen Füllhöhe (7) bei einem Betankungsvorgang schließt, oberhalb der maximalen Füllhöhe (7) mindestens ein weiteres Entlüftungsventil (15, 16) vorhanden ist, das bei einem um die Fahrzeuglängsachse (x) und/oder um die Fahrzeugquerachse (y) geneigten Kraftstoffbehälter (2) bei einer Beaufschlagung mit Kraftstoff (11) schließt.

2. Kraftstoffbehälter nach Anspruch 1,
**dadurch gekennzeichnet, dass** ein Entlüftungsventil (10), das in einer waagrechten Lage des Kraftstoffbehälters (2) bei Erreichung einer maximalen Füllhöhe (7) schließt, bis zu einer Befüllung von ca. 70 bis 90% des Kraftstoffbehälters (2) geöffnet ist, während das Befüllbegrenzungsventil (21) bei einer Befüllung des Kraftstoffbehälters (2) von 100% schließt.

3. Kraftstoffbehälter nach Anspruch 1 oder 2,
**dadurch gekennzeichnet, dass** das als Schwimmerventil ausgebildete weitere Entlüftungsventil (15) erst dann schließt, wenn der Kraftstoffbehälter (2) zu 100% befüllt ist und sich in dem Kraftstoffbehälter (2) ein Expansionsvolumen von 3 bis 10% befindet.

4. Kraftstoffbehälter nach einem der vorhergehenden Ansprüche,
**dadurch gekennzeichnet, dass** mindestens ein Roll-Over-Ventil (19, 22) an den Ausgleichsbehälter (8) angeschlossen ist, und dass sich das Roll-Over-Ventil außerhalb oder innerhalb des Kraftstoffbehälters (2) befindet.

## Claims

1. A fuel tank for a motor vehicle with a compensating tank (8) built within the fuel tank (2), onto which valves (10; 13) are arranged for ventilating the fuel tank, for limiting the refilling level, as well as for limiting the pressure acting in the fuel tank, **characterised in that** on the compensating tank (8) as well as a first refilling limiting valve (21), which closes on reaching the maximum filling level (7) in a refilling process, above the maximum refilling height (7) at least one further ventilating valve (15, 16) is present, which closes when the fuel tank (2) is inclined about the vehicle longitudinal axis (x) and/or about the lateral axis of the vehicle (y) when impacted with fuel (11).

2. A fuel tank according to claim 1, **characterised in that** a ventilating valve (10), which closes in a horizontal position of the fuel tank (2) on reaching a maximum refill height (7), is open up to a filling level of ca. 70-90% of the fuel tank (2), whilst the refilling level limiting valve (21) closes at a filling of the fuel tank (2) of 100%.

3. A fuel tank according to claim 1 or claim 2, **characterised in that** a further ventilating valve (15) constructed as a float valve only closes when the fuel tank (2) is filled to 100% and an expansion volume of 3-10% exists in the fuel tank (2).

4. A fuel tank in accordance with any of the previous claims, **characterised in that** at least one rollover valve (19, 22) is connected to the compensating tank (8) and that the rollover valve is positioned outside or inside the fuel tank (2).

## Revendications

1. Réservoir à carburant pour un véhicule automobile, comprenant un réservoir compensateur (8), monté à l'intérieur du réservoir de carburant (2) et des soupapes (10, 13) de dégazage, de limitation du niveau de remplissage et de limitation de la pression du réservoir de carburant,
**caractérisé en ce que**
sur le réservoir compensateur (8), en plus d'une première soupape de limitation de remplissage (21) qui se ferme quand est atteinte la hauteur maximale de remplissage (7), est montée au-dessus de cette hauteur maximale (7) au moins une autre soupape de dégazage (15, 16) qui se ferme sous l'action de carburant (11) produite quand le réservoir de carburant (2) s'incline autour d'un axe (x) longitudinal et/ou (y) transversal du véhicule.

2. Réservoir de carburant selon la revendication 1,
**caractérisé en ce qu'**
une soupape de dégazage (10) se ferme quand, le réservoir de carburant (2) étant en position horizontale, une hauteur maximale de remplissage (7) est atteinte, mais reste ouverte jusqu'à un remplissage de 70 à 90% du réservoir (2), la soupape de limitation de remplissage (21) se fermant quand le réservoir (2) se remplit à 100%.

3. Réservoir de carburant selon la revendication 1 ou 2,
**caractérisé en ce que**
l'autre soupape de dégazage (15) qui est une soupape à flotteur se ferme quand le réservoir de carburant (2) est rempli à 100% et il existe dans le réservoir un volume d'expansion de 3 à 10%.

4. Réservoir de carburant selon une des revendications précédentes,
**caractérisé en qu'**
au moins une soupape de retournement (roll-over) (19, 22) est raccordée au réservoir compensateur (8), cette soupape se trouvant à l'extérieur ou à l'intérieur du réservoir de carburant (2).
